# EUROPEAN PATENT SPECIFICATION

(11) **EP 3 858 533 B1**
(45) Date of publication and mention of the grant of the patent: **15.02.2023**
(21) Application number: 20179395.7
(22) Date of filing: 10.06.2020
(51) Int. Cl.: B23K 20/04, B21B 1/22, B21B 3/00, B23K 20/12, B23K 20/233, C21D 9/50, B23K 101/36, B23K 103/10, B23K 103/12, B23K 103/18

(54) **METHOD OF MANUFACTURING OF A THIN PLATE**
VERFAHREN ZUR HERSTELLUNG EINER DÜNNEN PLATTE
PROCÉDÉ DE FABRICATION D'UNE PLAQUE MINCE

(30) Priority: 30.01.2020 KR 20200011043
(43) Date of publication of application: 04.08.2021
(73) Proprietor: A.F.W. Co., Ltd., Waegwan-eup (KR)
(72) Inventor: KIM, KI YOUNG, Daegu (KR); KIM, MYEONG HUN, Gumi-si (KR)
(74) Representative: Beetz & Partner mbB

(56) References cited:
- JP-A- 2016 150 380
- KR-B1- 102 019 069
- KR-B1- 102 024 575

## Description

### TECHNICAL FIELD

The present invention relates to a method for manufacturing a thin plate according to the preamble of claim 1 (see for example KR 102 019 069 B1), and more specifically, to a method for manufacturing a thin plate by forming a heterogeneous metal joined body using friction welding on aluminum and copper and then roll-milling the heterogeneous metal joined body.

### DESCRIPTION OF RELATED ART

A thin plate refers to a thin steel plate which is typically about 3mm or less thick and is used for bus bars or polymer batteries.

Korean Patent No. 10-1768799 issued on August 9, 2017 discloses a copper/iron-nickel alloy joined thin plate formed by electrodeposition and a method for manufacturing the same. The method includes the steps of preparing a Cu thin plate and forming a joined thin plate by electrodepositing a Fe-Ni alloy onto the Cu thin plate. The electrolyte used in the electrodeposition contains, relative to one part by weight of iron sulfate(FeSO4·7H2O), 0.49 to 0.94 parts by weight of sulfur nickel(NiSO4· 6H2O), 0.20 to 0.31 parts by weight of boric acid(H3BO3), 0.009 to 0.044 parts by weight of sodium saccharine(C7H4NO3SNa), 0.0009 to 0.0033 parts by weight of sodium lauryl sulfate(C12H25O4SNa), and 0.23 to 0.37 parts by weight of sodium chloride(NaCl). The joined thin plate is formed in a thickness ranging from 15 *µ*m to 25*µ*m. In the electrodeposition step, a copper (Cu) thin plate is used as the cathode, and a nickel (Ni) plate is used as the anode. The temperature of the electrolyte ranges from 50°C to 70°C, pH from 0.5 to 2.0, and the current density from 5 mA/cm² to 30mA/cm². The joined thin plate has a thermal expansion coefficient ranging from 6.35(10⁻⁶/°C) to 7.10(10⁻⁶/°C).

Korean Patent No. 10-1550044 issued on August 28, 2015 discloses a thin plate, a method for manufacturing the thin plate, and a metal capacitor using the same. The method disclosed in Korean Patent No. 10-1550044 includes the steps of preparing a metal member, forming a plurality of through holes penetrating the metal member from the top to bottom or a plurality of holes arranged in one or more of the top and bottom, and forming an alloy layer of a predetermined thickness along the overall surface of the metal member using electroless plating. In the step of forming the alloy metal, electroless plating uses a plating agent that contains 1wt% to 70wt% of main component, 2wt% to 80wt% of sub component, 2wt% to 60wt% of complexing agent, and 5wt% to 50wt% of reducing agent. As the main component, a metal or metal hydrate is used and, as the sub component, either Na₂WO₄·2H₂O or MnSO₄·H₂O is selectively used. As the complexing agent, one of sodium malonate, ammonium citrate, sodium citrate, sodium gluconate, ammonium gluconate, ammonium adipate, sodium adipate, ammonium acetate, sodium acetate, ammonium lactate, sodium lactate, ammonium succinate, and sodium succinate is selectively used, and as the reducing agent, sodium hypophosphite is used.

As described above, the conventional thin plate is formed typically by plating a copper sheet with nickel. However, copper is expensive and heavy and may leave poor durability issues on the final product.

### SUMMARY

To address the foregoing issues, and according to the present invention, there is provided a method for manufacturing a thin plate as defined in claim 1.

In forming the heterogeneous metal joined body, the aluminum piece and the copper piece each may be mounted on a friction welder or equipment and are rotated to join together, in opposite directions from each other, at a rotational speed ranging from 1,600 revolutions per minute (rpm) to 2,200 rpm while applying a pressurization force ranging from 7tons to 20tons to a contact surface between the aluminum piece and the copper piece.

The method may further comprise, after forming the thin plate, cutting the thin plate to a preset length.

Thus, it is possible to achieve an increased aluminum-copper joining strength, a reduction in weight, and cost savings.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
Fig. 1 is a flowchart illustrating a method for manufacturing a thin plate according to an embodiment;
Fig. 2 is a view illustrating the step of forming a heterogeneous metal joined body as shown in Fig. 1;
Fig. 3 is a view illustrating the step of forming a thin plate as shown in Fig. 1; and
Fig. 4 is a flowchart illustrating a method for manufacturing a thin plate according to an embodiment.

### DETAILED DESCRIPTION OF EXEMPLARY EMBODIMENTS

Embodiments of the present disclosure are now described with reference to the accompanying drawings in such a detailed manner as to be easily practiced by one of ordinary skill in the art.

The terms as used herein may be defined as follows.

A method for manufacturing a thin plate, according to an embodiment, is described below in detail with reference to the accompanying drawings.

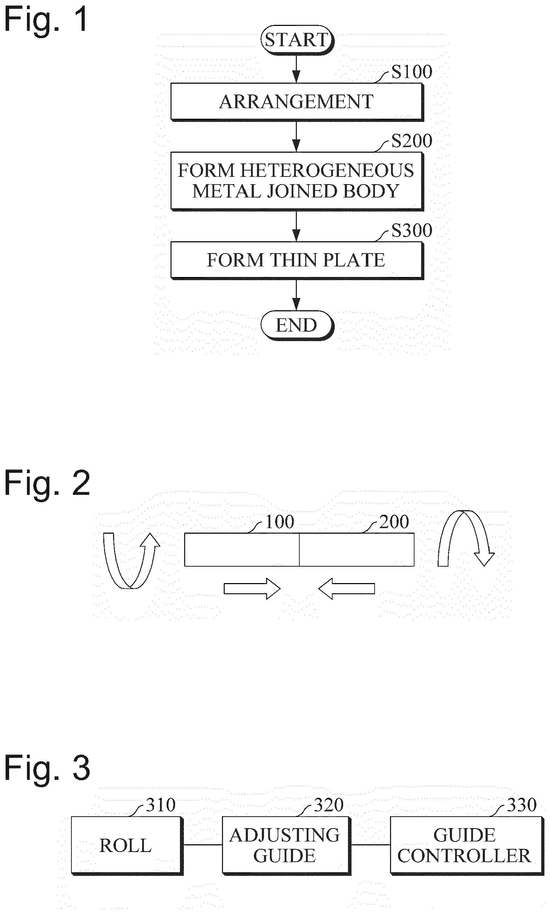

Fig. 1 is a flowchart illustrating a method for manufacturing a thin plate according to an embodiment. Fig. 2 is a view illustrating the step of forming a heterogeneous metal joined body as shown in Fig. 1. Fig. 3 is a view illustrating the step of forming a thin plate as shown in Fig. 1.

Referring to Figs. 1 to 3, a method for manufacturing a thin plate includes arranging (S100), forming a heterogeneous metal joined body (S200), and forming a thin plate (S300).

In S 100, a copper (Cu) piece 200 is placed on a side of a aluminum (Al) piece 100.

In S 100, the Al piece 100 and the Cu piece 200 may be shaped as a pillar, bar, or pole, but the Cu piece 200 and the Al piece 100 may be prepared in other various shapes or sizes.

In S 100, one side of the Cu piece 200 may be brought in tight contact with one side of the Al piece 100 by use of a friction welder or other equipment.

In S200, a heterogeneous metal joined body is formed by friction-welding between the side of the Cu piece 200 and the side of the Al piece 100. By the friction welding, the side of the Al piece 100 is plastically deformed to form a spread layer, and the side of the Cu piece 200 is plastically deformed to form a spread layer. The spread layer of the Al piece 100 and the spread layer of the Cu piece 200 are mixed into a mixed layer which is then cured.

In other words, in S200, the solid-state spread layer of the Al piece 100 and the solid-state spread layer of the Cu piece 200 are formed by frictional heat and are mixed together into a mixed layer. The mixed layer is cured or hardened.

Friction welding refers to a way of welding by generating frictional heat at a temperature ranging from 1,000°C to 1,400°C on the contact surface by pressurizing a side surface of a stationary material in a range from 3tons-10tons while rotating another material in a range from 1,600rpm to 2,200rpm and then stopping the rotating material while re-pressurizing to the contact surface in a range from 7tons to 20tons to thereby plastically deform it.

In S200, the Al piece 100 and the Cu piece 200 each are mounted on a friction welder or equipment and, as shown in Fig. 2, the Al piece 100 and the Cu piece 200 are rotated in opposite directions and are joined together by the frictional heat generated from the contact surface between the Al piece 100 and the Cu piece 200. The relative rotational speed of the Al piece 100 or the Cu piece 200 may be increased up to the sum of the respective RPMs of the Al piece 100 and the Cu piece 200. Despite no external braking force, the rotation of the Al piece 100 and the Cu piece 200 may be put on brake as the force of the Al piece 100 rotating in one direction and the force of the Cu piece 200 rotating in the opposite direction are canceled off each other on the contact surface.

In S200, each of the Al piece 100 and the Cu piece 200 mounted on a friction welder or equipment may be rotated at a speed ranging from 1,600rpm to 2,200rpm, in one direction for the Al piece 100 and in the opposite direction for the Cu piece 200, with the Al piece 100 and the Cu piece 200 in tight contact with each other, while pressurizing to the contact surface in a force ranging from 7tons to 20tons.

In S200, spread layers form on the respective side surfaces of the Al piece 100 and the Cu piece 200, and the spread layers are mixed together into a mixed layer. The mixed layer is hardened or cured, thereby forming a heterogeneous metal joined body secure and durable enough to be prevented from defects or cracks although subjected to roll-milling.

In S200 and according to the present invention, beads building up during friction welding are removed by a bead remover. Thus, after the surface of the heterogeneous metal joined body is made flat, smooth, or seamless, the heterogeneous metal joined body may go through roll-milling. By so doing, any defects may be reduced.

In S300, a rolling mill or equipment is used to roll the heterogeneous metal joined body formed in S200 into a thin plate.

In S300, the roll-milling may increase the crude density of the mixed layer and hence the adhesivity or strength between the Al piece 100 and the Cu piece 200.

In S300, the heterogeneous metal joined body may be inserted into a rolling mill or equipment to be roll-milled in the lengthwise or widthwise direction of the heterogeneous metal joined body.

In S300 and according to the present invention, the width of the heterogeneous metal joined body ranges from 1mm to 10mm.

In S300 and according to the present invention, the heterogeneous metal joined body is roll-milled in its widthwise direction into a thin plate of a desired shape or size. Thereby, various products may be implemented.

In S300 and according to the present invention, the heterogeneous metal joined body is roll-milled in a range from 50*µ*m to 50,000 µm, depending on uses, by adjusting the interval between the rolls of the rolling mill or equipment.

In S300 and according to the present invention, the rolling mill or equipment includes a plurality of rolls 310, a plurality of adjusting guides 320, and a plurality of guide controllers 330 as shown in Fig. 3.

The rolls 310 perform according to the present invention roll-milling on the heterogeneous metal joined body in the widthwise direction, with the width adjusted by the adjusting guides 320.

The adjusting guides 320 are installed, according to the present invention, on both sides of the rolls 310 and tight-contactingly move to the rolls 310 under the control of the guide controllers 330 to thereby adjusting the width or length of the heterogeneous metal joined body.

According to an embodiment, the adjusting guides 320 may be guide lines or guide plates.

The guide controllers 330 control, according to the present invention, the adjusting guides 320 to tight-contactingly move from both sides of the rolls 310 to the rolls 310, corresponding to a preset width of the heterogeneous metal joined body.

According to an embodiment, the guide controllers 330 may include a hydraulic or pneumatic cylinder and may move the guide lines or guide plates using the hydraulic or pneumatic cylinder.

The above-described method for manufacturing a thin plate may perform friction welding on the Al piece 100 and the Cu piece 200 under preset RPM and pressurization force conditions to thereby form a heterogeneous metal joined body with a mixed layer of the respective spread layers of the Cu piece 200 and the Al piece 100 and roll-milling on the heterogeneous metal joined body, thereby forming a thin plate. Thus, the joining strength between the Al piece 100 and the Cu piece 200 may be maximized, and the weight and costs may be significantly reduced.

Fig. 2 is a flowchart illustrating a method for manufacturing a thin plate according to an embodiment.

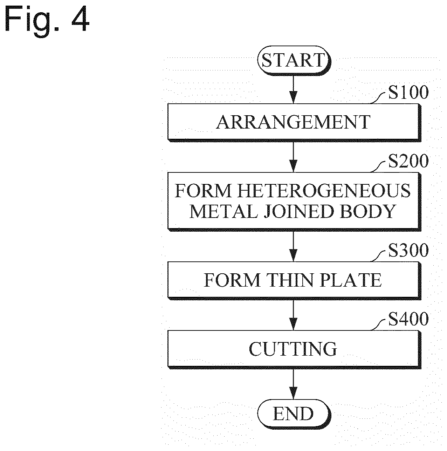

Referring to Fig. 4, after S300, the thin plate may be cut to a preset length (e.g., 5mm to 500mm) depending on the use (S400).

In S400, the thin plate may be cut by a cutter to various lengths or widths as necessary.

While the disclosure has been shown and described with reference to exemplary embodiments thereof, it will be apparent to those of ordinary skill in the art that various changes in form and detail may be made thereto without departing from the scope of the invention as defined by the following claims.

## Claims

1. A method for manufacturing a thin plate, the method comprising:
placing (S100) a copper piece (200) on a side of an aluminum piece (100);
forming (S200) a heterogeneous metal joined body by performing friction welding on the side of the aluminum piece (100) and a side of the copper piece (200) to thereby form a spread layer of the aluminum piece (100) on the side of the aluminum piece (100), and a spread layer of the copper piece (200) on the side of the copper piece (200), the respective spread layers of the aluminum piece and the copper piece being mixed into a mixed layer that is then cured,
and **characterised in that**:
the width of the heterogeneous metal joined body is from 1mm to 10mm;
and further **characterised by** the following:
removing beads building up during friction welding using a bead remover;
inserting the heterogeneous metal joined body into a rolling mill or equipment and
forming (S300) the thin plate having a thickness from 50*µ*m to 50,000*µ*m by roll-milling the heterogeneous metal joined body in said rolling mill or equipment in a widthwise direction thereof,
and wherein the rolling mill or equipment includes
a plurality of rolls (310), which are performing roll-milling on the heterogeneous metal joined body in the widthwise direction,
a plurality of adjusting guides (320) installed on both sides of the rolls and tight-contactingly which are moving to the rolls to thereby adjusting the width of the heterogeneous metal joined body, and
a plurality of guide controllers (330) which are controlling the adjusting guides to tight-contactingly move from both sides of the rolls to the rolls, corresponding to a preset width of the heterogeneous metal joined body.

2. The method of claim 1, wherein in forming (S200) the heterogeneous metal joined body, the aluminum piece (100) and the copper piece (200) each are mounted on a friction welder or equipment and are rotated to join together, in opposite directions from each other, at a rotational speed ranging from 1,600 revolutions per minute (rpm) to 2,200 rpm while applying a pressurization force ranging from 7tons to 20tons to a contact surface between the aluminum piece and the copper piece.

3. The method of claim 1, further comprising, after forming the thin plate, cutting the thin plate to a preset length.

## Patentansprüche

1. Verfahren zur Herstellung einer dünnen Platte, wobei das Verfahren umfasst:
Platzieren (S100) eines Kupferstücks (200) an einer Seite eines Aluminiumstücks (100);
Bilden (S200) eines heterogenen Metallverbundkörpers durch Ausführen von Reibschweißen auf der Seite des Aluminiumstücks (100) und einer Seite des Kupferstücks (200), um dadurch eine Spreizschicht des Aluminiumstücks (100) auf der Seite des Aluminiumstücks (100) und eine Spreizschicht des Kupferstücks (200) auf der Seite des Kupferstücks (200) zu bilden, wobei die jeweiligen Spreizschichten des Aluminiumstücks und des Kupferstücks zu einer Mischschicht vermischt werden, die dann gehärtet wird,
und **dadurch gekennzeichnet, dass**:
die Breite des heterogenen Metallverbundkörpers von 1mm bis 10mm beträgt;
und ferner **gekennzeichnet durch**:
Entfernen von beim Reibschweißen entstehenden Wülsten mit einem Wulstentferner;
Einführen des heterogenen Metallverbundkörpers in ein Walzwerk oder eine Walzanlage und Formen (S300) des dünnen Blechs mit einer Dicke von 50 µm bis 50.000 µm durch Walzen des heterogenen Metallverbundkörpers in dem Walzwerk oder der Walzanlage in einer Breitenrichtung desselben,
und wobei das Walzwerk oder die Walzanlage
eine Mehrzahl von Walzen (310), die das Walzen des heterogenen Metallverbundkörpers in der Breitenrichtung durchführen,
eine Mehrzahl von Einstellführungen, die auf beiden Seiten der Walzen installiert sind und sich in engen Kontakt mit den Walzen bewegen, um dadurch die Breite des heterogenen Metallverbundkörpers einzustellen, und
eine Mehrzahl von Führungssteuerungen (330) umfasst, die die Einstellführungen so steuern, dass sie sich von beiden Seiten der Walzen her in engen Kontakt zu den Walzen bewegen, entsprechend einer voreingestellten Breite des heterogenen Metallverbundkörpers.

2. Verfahren nach Anspruch 1, bei dem beim Bilden (S200) des heterogenen Metallverbundkörpers das Aluminiumstück (100) und das Kupferstück (200) jeweils auf einem Reibschweißgerät oder einer Reibschweißanlage montiert sind und in entgegengesetzten Richtungen mit einer Drehzahl im Bereich von 1600 Umdrehungen pro Minute (U/min) bis 2200 U/min gedreht werden, um sich zu verbinden, während eine Druckkraft im Bereich von 7 t bis 20 t auf eine Kontaktfläche zwischen dem Aluminiumstück und dem Kupferstück ausgeübt wird.

3. Verfahren nach Anspruch 1, das ferner nach dem Formen der dünnen Platte das Schneiden der dünnen Platte auf eine vorgegebene Länge umfasst.

## Revendications

1. Procédé de fabrication d'une plaque mince, le procédé consistant à :
placer (S100) une pièce de cuivre (200) sur un côté d'une pièce d'aluminium (100) ;
former (S200) un corps métallique hétérogène assemblé en réalisant un soudage par friction sur le côté de la pièce d'aluminium (100) et un côté de la pièce de cuivre (200) pour former ainsi une couche étalée de la pièce d'aluminium (100) sur le côté de la pièce d'aluminium (100), et une couche étalée de la pièce de cuivre (200) sur le côté de la pièce de cuivre (200), les couches étalées respectives de la pièce d'aluminium et de la pièce de cuivre étant mélangées en une couche mixte qui est ensuite solidifiée,
et **caractérisé en ce que**
la largeur du corps métallique hétérogène assemblé est comprise entre 1 mm et 10 mm ;
et **caractérisé en outre en ce qu'**il consiste à:
éliminer les bourrelets qui se forment pendant le soudage par friction en utilisant un dispositif d'élimination des bourrelets ;
insérer le corps métallique hétérogène assemblé dans un laminoir ou un équipement de laminage et former (S300) la plaque mince ayant une épaisseur de 50 µm à 50 000 µm en laminant le corps métallique hétérogène assemblé dans ledit laminoir ou équipement de laminage dans le sens de la largeur de celui-ci,
et dans lequel le laminoir ou l'équipement de laminage comprend
une pluralité de rouleaux (310), qui effectuent un laminage sur le corps métallique hétérogène assemblé dans le sens de la largeur,
une pluralité de guides de réglage installés des deux côtés des rouleaux qui se déplacent jusqu'à un contact étroit avec les rouleaux pour régler ainsi la largeur du corps métallique hétérogène assemblé, et
une pluralité de contrôleurs de guides (330) qui commandent les guides de réglage pour qu'ils se déplacent vers les rouleaux jusqu'au contact étroit des deux côtés des rouleaux, correspondant à une largeur prédéfinie du corps métallique hétérogène assemblé.

2. Procédé selon la revendication 1, dans lequel, lors de la formation (S200) du corps métallique hétérogène assemblé, la pièce en aluminium (100) et la pièce en cuivre (200) sont chacune montées sur une soudeuse ou un équipement de soudage par friction et, pour être assemblées, sont mises en rotation dans des directions opposées l'une à l'autre, à une vitesse de rotation allant de 1 600 tours par minute (tr/min) à 2 200 tr/min, tout en appliquant une force de pressurisation allant de 7 tonnes à 20 tonnes à une surface de contact entre la pièce en aluminium et la pièce en cuivre.

3. Procédé selon la revendication 1, consistant en outre, après la formation de la plaque mince, à couper la plaque mince à une longueur prédéfinie.
